# EUROPEAN PATENT APPLICATION

(11) **EP 4 274 238 A1**
(43) Date of publication of application: **08.11.2023**
(21) Application number: 23168448.1
(22) Date of filing: 18.04.2023
(51) Int. Cl.: H04N 21/234, G02B 27/01, G06F 3/01, G06T 15/00, H04N 21/2343, H04N 21/41, H04N 21/414, H04N 21/43, H04N 21/436, H04N 21/44, H04N 21/4402, H04N 21/472, H04N 21/81, H04N 21/84

(54) **DISPLAY OF VIDEO CONTENT**

(30) Priority: 07.05.2022 GB 202206700
(71) Applicant: Nokia Technologies Oy, 02610 Espoo (FI)
(72) Inventor: LAAKSONEN, Lasse Juhani, Tampere (FI)
(74) Representative: Nokia EPO representatives

(57) **Abstract**

A system for controlling display to a consumer of a video content stream comprising primary video content for display in a first display space and augmenting video content, the system comprising:
one or more apparatus configured to provide a display space comprising the first display space for displaying to the consumer the primary video content and a second display space;
means for controlling display to the consumer of the primary video content in the first display space; and
means for controlling, automatically without any contemporaneous consumer input, simultaneous display to the consumer of augmenting video content in at least a portion of the second display space in dependence upon a size of the second display space.

## Description

### TECHNOLOGICAL FIELD

Embodiments of the present disclosure relate to systems for controlling display of a video content stream.

### BACKGROUND

There exist various different systems for controlling display of a video content stream. Normally different systems display the same video content to different users. The systems can provide for some limited user control such as changing color, contrast or brightness or changing the display format from widescreen to standard or switching subtitles on or off or changing the language.

### BRIEF SUMMARY

According to various, but not necessarily all, embodiments there is provided a system for controlling display to a consumer of a video content stream comprising primary video content for display in a first display space and augmenting video content, the system comprising:
one or more apparatus configured to provide a display space comprising the first display space for displaying to the consumer the primary video content and a second display space;
means for controlling display to the consumer of the primary video content in the first display space; and
means for controlling, automatically without any contemporaneous consumer input, simultaneous display to the consumer of augmenting video content in at least a portion of the second display space in dependence upon a size of the second display space.

In some but not necessarily all examples, the video content stream is protected to prevent modification.

In some but not necessarily all examples, the video stream comprises one or more parameters that define, in dependence upon the size of the second display space, whether or not any augmenting video content is displayed.

In some but not necessarily all examples, the video stream comprises one or more parameters that define where augmenting video content is displayed.

In some but not necessarily all examples, the video stream comprises one or more parameters that define, in dependence upon the size of the second display space, at what scale augmenting video content is displayed.

In some but not necessarily all examples, the video stream comprises one or more parameters that define, in dependence upon the size of the second display space, which sub-set of a set of augmenting video objects is displayed.

In some but not necessarily all examples, the system comprises means for determining a size of the second display space, and means for detecting a change in a size of the second display space to a new size, and means for controlling display of augmenting video content in at least a portion of the second display space in dependence upon a new size of the second display space.

In some but not necessarily all examples, the system comprises a first apparatus configured to control the first display space and display the primary video content in the first display space and a second apparatus configured to control the second display space and display the augmenting video content in the second display space.

In some but not necessarily all examples, a size of the second display space is dependent upon a size of a display of the second apparatus.

In some but not necessarily all examples, a size of the second display space is an effective size of the second display space with respect to a size of the first display space from a perspective of the consumer using the second apparatus.

In some but not necessarily all examples, a size of the second display space, and display of the augmenting video content, are dependent upon:
a distance between the first apparatus and the second apparatus;
an angle of view of the second apparatus; and/or
the first display space.

In some but not necessarily all examples, the second apparatus is a hand-portable apparatus or a head-worn apparatus.

In some but not necessarily all examples, the system comprises a first apparatus configured to control the display space comprising the first display space and the second display space, and display the primary video content and the augmenting video content in the display space, wherein the primary video content is displayed in the first display space and the augmenting video content is displayed at least in the second display space.

According to various, but not necessarily all, embodiments there is provided a method for controlling display to a consumer of a video content stream comprising primary video content for display in a first display space and augmenting video content, the method comprising:
providing a display space comprising a first display space for displaying to the consumer the primary video content and a second display space;
controlling display to the consumer of the primary video content in the first display space; and controlling, automatically without any contemporaneous consumer input, simultaneous display to the consumer of the augmenting video content in at least a portion of the second display space in dependence upon a size of the second display space.

According to various, but not necessarily all, embodiments there is provided a computer program that when run by a computer enables:
accessing a video content stream comprising primary video content for display to a consumer in a first display space and augmenting video content;
controlling a display space comprising the first display space for displaying to the consumer the primary video content and a second display space;
controlling display to the consumer of the primary video content in the first display space; and
controlling, automatically without any contemporaneous consumer input, simultaneous display to the consumer of the augmenting video content in at least a portion of the second display space in dependence upon a size of the second display space.

According to various, but not necessarily all, embodiments there is provided a system for controlling display of a video content stream comprising primary video content for display in a first display space and augmenting video content, the system comprising:
one or more apparatus configured to provide a display space comprising the first display space for displaying the primary video content and a second display space;
means for controlling display of the primary video content in the first display space; and
means for controlling display of augmenting video content in at least a portion of the second display space in dependence upon a size of the second display space,
wherein the video stream comprises one or more parameters that define, in dependence upon the size of the second display space, which sub-set of a set of augmenting video objects is displayed.

According to various, but not necessarily all, embodiments there is provided
a system for controlling display of primary video content for display in a first display space and augmenting video content, the system comprising:
first apparatus and second apparatus configured to provide a display space comprising the first display space for displaying the primary video content and a second display space wherein the first apparatus is configured to control the first display space and display the primary video content in the first display space and the second apparatus is configured to control the second display space and display the augmenting video content in the second display space;
means for controlling display of the primary video content in the first display space; and
means for controlling display of augmenting video content in at least a portion of the second display space in dependence upon a size of the second display space,
wherein a size of the second display space is an effective size of the second display space with respect to a size of the first display space from a perspective of the user using the second apparatus.

According to various, but not necessarily all, embodiments there is provided
a system for controlling display of a video content stream comprising primary video content for display in a first display space and augmenting video content, the system comprising:
a first apparatus configured to provide a display space comprising the first display space for displaying the primary video content and a second display space, and configured to control the display space to display the primary video content and the augmenting video content;
means for controlling display of the primary video content in the first display space; and
means for controlling display of augmenting video content in at least a portion of the second display space in dependence upon a size of the second display space, wherein the second display space is a peripheral margin of the display space that is not part of the first display space and is unused to display the primary video content.

According to various, but not necessarily all, embodiments there is provided
a system as claimed in claim 18, wherein a size of second display space is dependent upon an aspect ratio of a presentation format of the primary video content, wherein the second display space provides a peripheral border to the first display space.

According to various, but not necessarily all, embodiments there is provided examples as claimed in the appended claims.

According to various, but not necessarily all, embodiments there is provided a system for controlling display of a video content stream comprising primary video content for display in a first display space and augmenting video content, the system comprising:
one or more apparatus configured to provide a display space comprising the first display space for displaying the primary video content and a second display space;
means for controlling display of the primary video content in the first display space; and
means for controlling display of augmenting video content in at least a portion of the second display space in dependence upon a size of the second display space.

### BRIEF DESCRIPTION

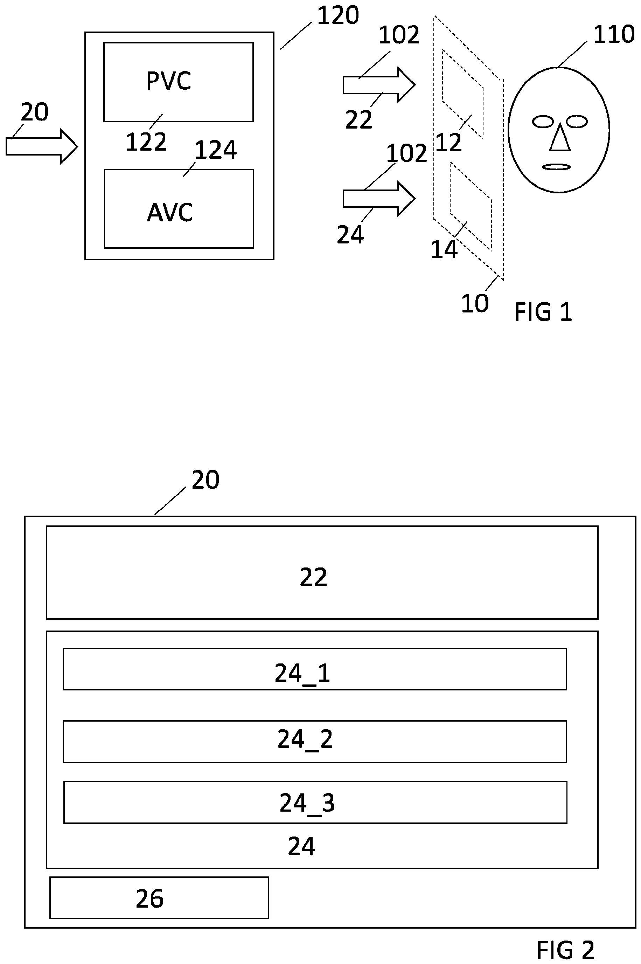

Some examples will now be described with reference to the accompanying drawings in which: FIGs. 1 to 18 show examples of the subject matter described herein;

### DETAILED DESCRIPTION

The following description describes a system 120 for controlling display of video content comprising primary video content 22 for display in a first display space 12 and augmenting video content 24. The system 120 comprises: one or more apparatus 30, 32 configured to provide a display space 10 comprising the first display space 12 for displaying 102 the primary video content 22 and a second display space 14; means for controlling display of the primary video content 22 in the first display space 12; and means for controlling display of augmenting video content 24 in at least a portion of the second display space 14.

Video refers to a moving visual image, presented as a series of successive frames with a frame rate of at least M frames per second where M is 24 or other higher values. Video content is the visual image.

A video content stream is the time varying data used to create video as a series of successive frames of video content.

A display space is a two- or three-dimensional space that is usable for the display of video.

FIG 1 illustrates an example of a system 120 for controlling display 102 to a user 110 of video content. In this example the video content is provided as a video content stream 20 comprising primary video content 22 and augmenting video content 24.

The primary video content 22 is displayed 102 to the user and the augmenting video content 24 is optionally displayed to the user 110. The augmenting video content 24 augments (adds to) the primary video content 22.

The system 120 comprises a primary video content control block 122 that is configured to control display 102 of the primary video content (PVC) 22. The PVC control block 122 can be a physical circuit or functionality performed by a controller.

The system 120 comprises an augmenting video content control block 124 that is configured to control display 102 of the augmenting video content (AVC) 24. The AVC control block 122 can be a physical circuit or functionality performed by the controller.

In some examples, a common controller or common circuitry provides the PVC control block 122 and the AVC control block 124. In other examples, different controllers or different circuitry provides the PVC control block 122 and the AVC control block 124.

The system 120 comprises one or more apparatus. In some examples, a single apparatus comprises both the PVC control block 122 and the AVC control block 124. In other examples, different apparatus comprises the PVC control block 122 and the AVC control block 124.

The system 120 is configured to provide a display space 10 comprising the first display space 12 for displaying 102 to the user 110 the primary video content 22 and a second display space 14.

The PVC control block 122 is configured to control display to the user 110 of the primary video content 22 in the first display space 12.

The AVC control block 124 is configured to control simultaneous display to the user 110 of augmenting video content 24 in at least a portion of the second display space 14.

The display of augmenting video content 24 in at least a portion of the second display space 14 is dependent upon a size of the second display space 14.

The displaying of the primary video content 22 in the first display space 12 and the augmenting video content 24 in the second display space 14 is simultaneous. There is a live, real-time display of the simultaneous primary video content 22 in the first display space 12 and of the augmenting video content 24 in the second display space 14.

In at least some examples, the primary video content 22 and the augmenting video content 24 in the video content stream 20 are thematically linked. For example, in at least some examples, the augmenting video content 24 provides at least one object, for example a moving object, that cinematically supplements the dynamic scene displayed by the primary video content 22.

In at least some examples, the primary video content 22 provides a background video scene and the augmenting video content 24 provides at least one foreground video object. The foreground video object is positioned and sized to appear nearest to the user 110 and objects within the background video scene appear farther from the user 110. The combination of the primary video content 22 and the augmenting video content 24 creates a three-dimensional depth effect.

In at least some examples, the augmenting video content 24 overlaps a portion of the primary video content 22. In some examples the overlapping augmenting video content 24 obscures a portion of the primary video content 22. In some examples a portion of the overlapping augmenting video content 24 is obscured by a portion of the primary video content 22.

In at least some examples, the content is curated for the user 110 and the user is a 'consumer'. That is the user 110 is passive and not active in the control of the augmenting video content 24. In at least some examples, the AVC control block 124 is configured to control automatically without any contemporaneous user/consumer input, simultaneous display to the consumer 110 of augmenting video content 24 in at least a portion of the second display space 14 in dependence upon a size of the second display space 14. The system 120 is therefore a system for controlling display to a consumer 110 of a video content stream 20 comprising primary video content 22 for display in a first display space 12 and augmenting video content 24.

The system 120 therefore comprises: one or more apparatus configured to provide a display space 10 comprising the first display space 12 for displaying 102 to the consumer 110 the primary video content 22 and a second display space 14; means for controlling display to the consumer 110 of the primary video content 22 in the first display space 12; and means for controlling, automatically without any contemporaneous consumer input, simultaneous display to the consumer 110 of augmenting video content 24 in at least a portion of the second display space 14 in dependence upon a size of the second display space 14.

FIG 2 illustrates an example of a video content stream 20. As previously described the video content stream 20 comprises primary video content 22 and augmenting video content 24.

In this example, but not necessarily all examples, the augmenting video content 24 comprises a plurality of augmenting video objects 24_1, 24_2, 24_3.

The system 120 displays the primary video content 22 in the first display space 12 and simultaneously displays one or more augmenting video objects 24_1, 24_2, 24_3 as augmenting video content 24 in the second display space 14. The display of the one or more augmenting video objects 24_1, 24_2, 24_3 is dependent upon a size of the second display space 14.

In this example, but not necessarily all examples, the video content stream 20 comprises one or more configuration parameters 26 that control a configuration of the displayed augmenting video content 24. These configuration parameters 26 curate the augmenting video content 24, and are used to automatically control any one or more of if, what, where, when, how augmenting video content 24 is displayed.

In at least some examples the configuration parameters 26:
(i) define, in dependence upon the size of the second display space 14, whether or not any augmenting video content 24 is displayed. For example, in some embodiments, the augmenting video content 24 has associated metadata that defines its minimum size.
   and/or
(ii) define where augmenting video content 24 is displayed. This is optionally dependent upon the size of the second display space 14.
   and/or
(iii) define, in dependence upon the size of the second display space 14, at what scale augmenting video content 24 is displayed.
   and/or
(iv) define, in dependence upon the size of the second display space 14, which sub-set of a set of augmenting video objects 24_n is displayed. The sub-set can be a null or empty set.

The sub-set can comprise a single augmenting video object 24_n. The sub-set can comprise a plurality of augmenting video objects 24_n.

In some examples, the configuration parameters 26 can define how a 'size' of the second display space 14 is measured. For example, as a maximum dimension, a dimension in a certain direction, dimensions in certain directions, an area, a projected area etc.

In some but not necessarily all examples, the video content stream 20 is protected to prevent modification. A technical means, such as digital rights management, cryptographic signature etc. is used, to control use of the video content stream and in particular to control adaptation. The consumer 110 has 'read' access but not edit/write access. The read access extends to one of a set of options defined by a creator of the video content stream 20 and the consumer 110 cannot adapt/edit/vary an option. The creator of the video content stream 20, not the consumer 110, therefore controls the conditions that determine, automatically, if, what, where, when, how augmenting video content 24 is displayed.

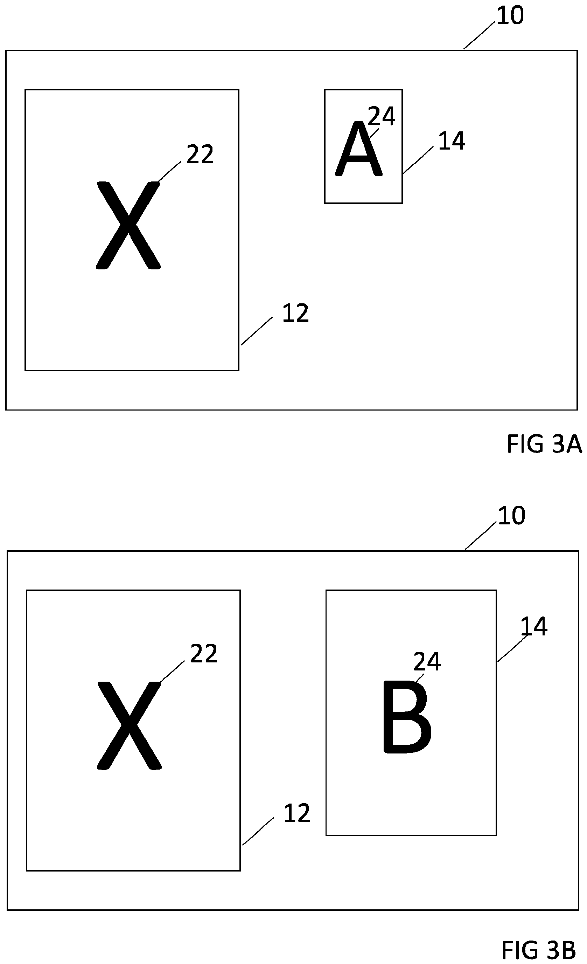

FIG 3A and 3B illustrate an example of a display space 10 comprising a first display space 12 displaying 102 the primary video content 22 and a second display space 14 displaying augmenting video content 24. The display of the augmenting video content 24 is dependent upon a size of the second display space 14.

In FIG 3A, the second display space 14 has a first size and the displayed augmenting video content 24 has a first configuration "A".

In FIG 3B, the second display space 14 has a second size and the displayed augmenting video content 24 has a second configuration "B".

It can be seen, that as the size of the second display space 14 is changed then the configuration of the displayed augmenting video content 24 changes.

In some but not necessarily all examples, the size of the second display space 14 is the size of that portion of the second display space 14 that is available for use for display of augmenting video content 24.

In some examples, the size of the second display space 14 is a relative size of the second display space 14 (or available portion thereof) compared to a size of first display space 12. In other examples, the size of the second display space 14 is an absolute (physical) size of the second display space 14 (or available portion thereof).

The relative size of the second display space 14 (or available portion thereof) can, for example, be a physical relative size that can be expressed as a ratio of an absolute (physical) size of the second display space 14 (or available portion thereof) in measurement units to an absolute size of the first display space 12 in the same measurement units.

The relative size of the second display space 14 (or available portion thereof) can, for example, be a user-perspective relative size that can be expressed as a ratio of a size of the second display space 14 (or available portion thereof) as perceived by the user 110 to a size of the first display space 12 as perceived by the user 110. This can, for example, change with a position or orientation of the first display space 12 relative to the user 110 and/or a position or orientation of the second display space 14 relative the user 110.

In some but not necessarily all examples, the system 120 comprises sizing means for determining a size of the second display space 14.

In some but not necessarily all examples, the system 120 comprises selection means for searching configuration parameters 26 of the video content stream 20 and for selecting, for display on at least a portion of the second display space 14, augmenting video content 24 based on the configuration parameters 26 and the determined size.

In some but not necessarily all examples, the sizing means and the selection means are continuously operable, and the system 120 is configured to detect a change in a size of the second display space 14 to a new size, and control display of augmenting video content 24 in at least a portion of the second display space 14 in dependence upon the new size of the second display space 14.

The sizing and selection means can be provided by the AVC control block 124.

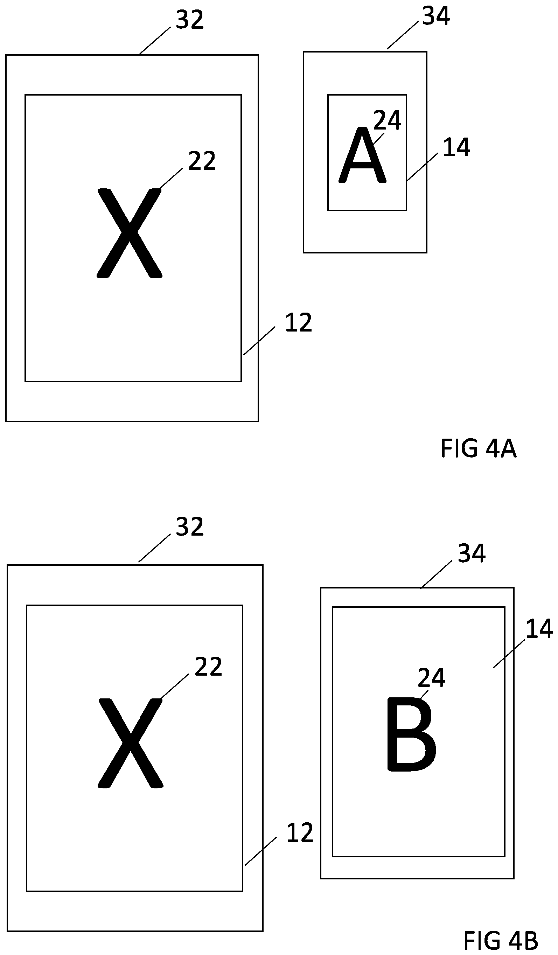

FIG 4A and 4B illustrate an example of the display space 10 as previously described with reference to FIGs 1 and 3A & 3B. The description provided for FIGs 3A & 3B is also relevant for FIGs 4A & 4B.

The display space 10 comprises a first display space 12 displaying 102 the primary video content 22 and a second display space 14 displaying augmenting video content 24. The display of the augmenting video content 24 is dependent upon a size of the second display space 14.

A first apparatus 32 is configured to control the first display space 12 and display 102 the primary video content 22 in the first display space 12.

A second apparatus 34, different to the first apparatus 32, is configured to control the second display space 14 and display the augmenting video content 24 in the second display space 14. The second apparatus 34 is configured to control display of the augmenting video content 24 in dependence upon the size of the second display space 14.

In FIG 4A, the second display space 14 has a first size and the displayed augmenting video content 24 has a first configuration "A".

In FIG 4B, the second display space 14 has a second size and the displayed augmenting video content 24 has a second configuration "B". The second apparatus 34 can, for example, be different to the second apparatus 34 illustrated in FIG 4A. In at least some examples, a size of the second display space 14 is dependent upon a size of a display of the second apparatus 34.

It can be seen, that as the size of the second display space 14 is changed then the configuration of the displayed augmenting video content 24 changes.

In some but not necessarily all examples, the first apparatus 32 displays primary video content 22 only and does not display augmenting video content 24 and the second apparatus 34 displays augmenting video content 24 only, and does not display any primary video content 22.

In some but not necessarily all examples (not illustrated in FIGs 4A, 4B), the first display space 12 and second display space 14 can overlap. For example, the second apparatus 34 can be placed wholly or partially in front of the first apparatus 32 from the user's perspective. In other examples, the first display space 12 and second display space 14 do not overlap. For example, the second apparatus 34 is not placed wholly or partially in front of the first apparatus 32 from the user's perspective.

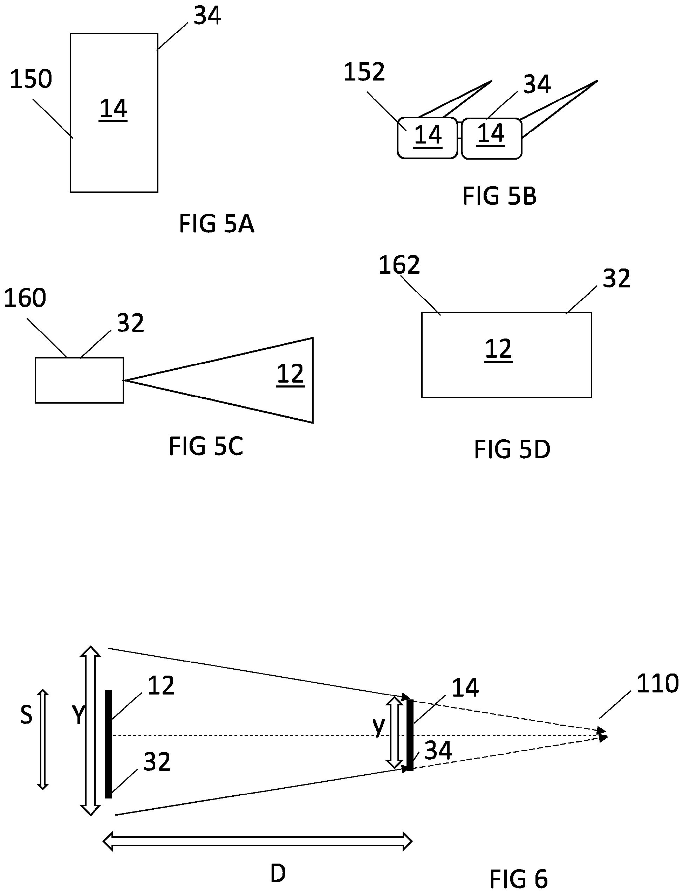

In some but not necessarily all examples, the second apparatus 34 is a hand-portable apparatus 150 (FIG 5A) or a head-worn apparatus 152 or near eye projection device (FIG 5B).

In some but not necessarily all examples, the first apparatus 32 is a projection device 160 (FIG 5C) that projects the first display space 12 or a display screen 162 such as a television or monitor (FIG 5D).

The system 120 and, in particular the sizing means can receive information that enables the sizing of the second display space 14.

Where the size of the second display space 14 is an absolute (physical) size of the second display space 14, a physical dimension for a display of the second apparatus 34 can be read from memory or can be transferred from the second apparatus 34. Optionally, additional information can be read/transferred that indicates what portion of the display is available for use.

Where the size of the second display space 14 is a physical relative size of the second display space 14, a physical dimension for a display of the second apparatus 34 can be read from memory of can be transferred from the second apparatus 34 and a physical dimension for a display of the first apparatus 32 can be read from memory or can be transferred from the first apparatus 32. Optionally, additional information can be read/transferred that indicates what portion of the display of the second apparatus 34 is available for use. The physical relative size can be expressed as a ratio of the absolute (physical) size of the second display space 14 (or available portion thereof) in measurement units to an absolute size of the first display space 12 in the same measurement units.

Where the size of the second display space 14 is user-perspective relative size, a user-perspective dimension of the second display space 14 is compared to a user-perspective dimension of the first display space 12. A user-perspective dimension of the first display space 12 can be determined, e.g., based on computer vision. If known content is displayed on the first display space 12, then its size at the first display space 12 can be determined by processing an image of the content captured by a camera. This can be converted to a perceived size at the user based on the spatial relationship between the user and the camera. A user-perspective dimension of the second display space 14 can be determined based on computer vision. If known content is displayed on the second display space 14, then its size at the second display space 14 can be determined by processing an image of the content captured by a camera. This can be converted to a perceived size at the user based on the spatial relationship between the user and the camera.

Alternatively, as illustrated in FIG 6, a user-perspective relative size can be determined using a physical dimension (y) for a display of the second apparatus 34, a physical dimension (S) for a display of the first apparatus 32 and a distance (D) between the displays of the second apparatus 34 and the first apparatus 32 along a line of sight of the user 110.

In this example, the first display space 12 at the first apparatus 32 and the second display space 14 at the second apparatus 34 are represented as parallel areas that are orthogonal to a line of sight of the user 110. The first display space 12 at the first apparatus 32 has a size S. The second display space 14 at the second apparatus 34 has a size y.

Assuming a fixed (or measured) distance between the second apparatus 34 and the user 110 and a variable distance D between the first apparatus 32 and the second apparatus 34, then the projected size Y of the second display space 14 when projected onto a plane of the first display space 12 has a projected size that scales linearly with D, all other possible variables (distance to the second display space 14 from the user 110, the size of the first display space 12) being fixed. The distance D between the first apparatus 32 and the second apparatus 34 can be measured using any suitable technology.

In some examples, the second apparatus 34 is a hand-portable apparatus 150. In at least some of these examples, a size of the second display space 14 at the second apparatus 34 is a size of a display screen of the hand-portable apparatus 150.

In some examples, the second apparatus 34 is a head-worn apparatus 152. In at least some of these examples, a size of the second display space 14 at the second apparatus 34 is an angle of view provided by the head-worn apparatus 152.

The physical dimension y for a display of the second apparatus 34 can be read from memory of can be transferred from the second apparatus 34. Optionally, additional information can be read/transferred that indicates what portion of the display of the second apparatus 34 is available for use.

The physical dimension S for a display of the first apparatus 32 can be read from memory or can be transferred from the first apparatus 32.

The dependency on the size of the second display space 14 is a dependency on the effective size (Y) of the second display space 14 from a perspective of the user 110 using the second apparatus 34 with respect to a size (S) of the first display space 12. The effective size (Y) of the second display space 14 from a perspective of the user 110 using the second apparatus 34 is dependent upon the distance D to the first display space 12 and is also dependent on the field/angle of view associated with the second display space 14. The field of view associated with the second display space 14 is determined by the angle of view of the second apparatus 34 or a size of first display space 12 defined by a display screen of the second apparatus 34.

Thus, the system 120 comprises: a first apparatus 32 and a second apparatus 34 configured to provide a display space 10 comprising the first display space 12 for displaying 102 the primary video content 22 and a second display space 14 wherein the first apparatus 32 is configured to control the first display space 12 and display the primary video content 22 in the first display space 12 and the second apparatus 34 is configured to control the second display space 14 and display the augmenting video content 24 in the second display space 14 in dependence upon a size of the second display space 14, wherein a size of the second display space 14 is an effective size of the second display space 14 with respect to a size of the first display space 12 from a perspective of the user 110 using the second apparatus 34.

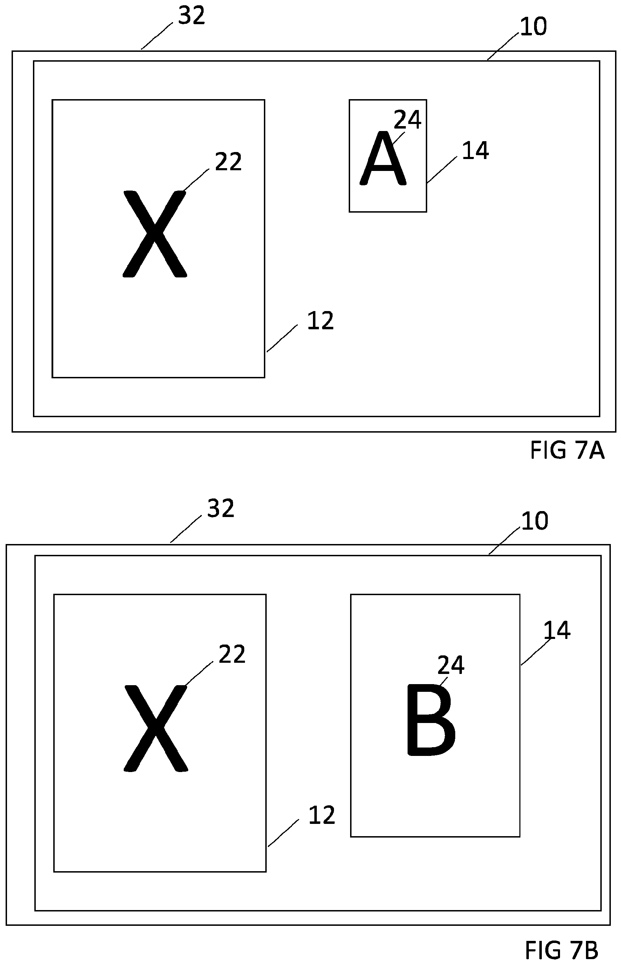

FIG 7A and 7B illustrate an example of the display space 10 as previously described with reference to FIGs 1 and 3A & 3B. The description provided for FIGs 3A & 3B is also relevant for FIGs 7A & 7B.

The display space 10 comprises a first display space 12 displaying 102 the primary video content 22 and a second display space 14 displaying augmenting video content 24. The display of the augmenting video content 24 is dependent upon a size of the second display space 14.

A first apparatus 32 is configured to control the first display space 12 and display 102 the primary video content 22. The first apparatus 32 is also configured to control the second display space 14 and display the augmenting video content 24. The first apparatus 32 is configured to control display of the augmenting video content 24 in dependence upon the size of the second display space 14.

In FIG 7A, the second display space 14 has a first size and the displayed augmenting video content 24 has a first configuration "A".

In FIG 7B, the second display space 14 has a second size and the displayed augmenting video content 24 has a second configuration "B".

It can be seen, that as the size of the second display space 14 is changed then the configuration of the displayed augmenting video content 24 changes.

In this example, the primary video content 22 is displayed only on the first apparatus 32 and the augmenting video content 24 is displayed only on the first apparatus 32.

In this example, the primary video content 22 is displayed only in the first display space 12. The augmenting video content 24 is displayed in the second display space 14. However, in at least some examples (not illustrated in FIG 7A, 7B), a portion of the augmenting video content 24 is displayed in the first display space 12 in an overlapping or obscuring arrangement with the primary video content 22.

In some examples, the size of the second display space 14 is dependent upon display of the primary video content 22 in the first display space 12, for example, the second display space 14 can be an unused peripheral margin.

In some examples, information (e.g., configuration parameters 26) about the media presentation capabilities of the second apparatus 34 for the presentation of the augmenting video content 24 and the relative positions of the first apparatus 32 and the second apparatus 34 (and the user 110) are used to:
select content 22, 24 to be presented to user 110, and
modify the timing, position, orientation, movement, transparency, or size of the augmenting video content 24 presented to user.

The selection and modification can be based, e.g., on:
availability of a second apparatus 34 e.g., an augmented reality or extended reality (AR/XR) content presentation device;
a size of at least one of: screen or field of view of first or second apparatus 32, 34;
other technical capability including screen refresh rate, color profile, or HDR support;
the relative positions and distance between the at least first and second apparatus 32, 34, or presentation of augmentation anchors using the first apparatus 32, detection of the anchors using a camera, and observing the scaling of said anchors.

In further embodiments, the inactive parts of a display can be used for augmentation of the video content being presented on the active part of the display. For example, in addition to the size of the screen itself, the sizes of the black borders on a display caused by different content aspect ratio can be used to select augmenting video content 24 relating to the primary video content 22 and presented at least partly on the black borders to provide the user a more immersive media content experience.

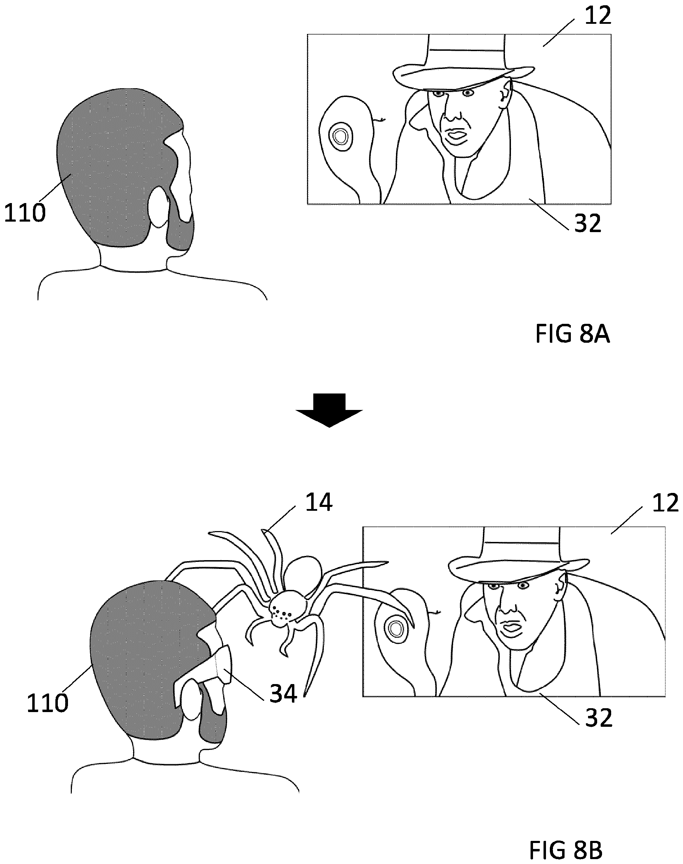

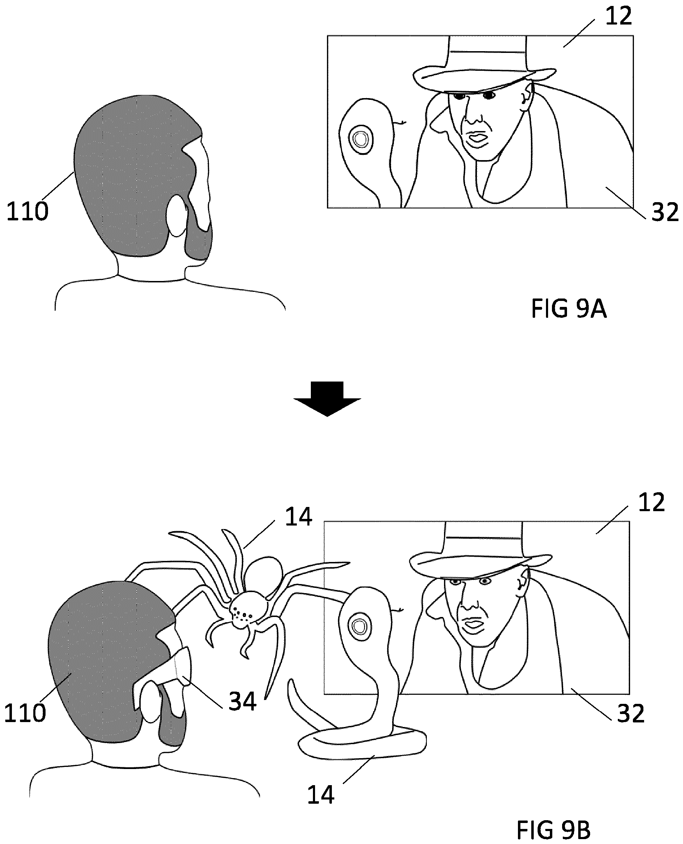

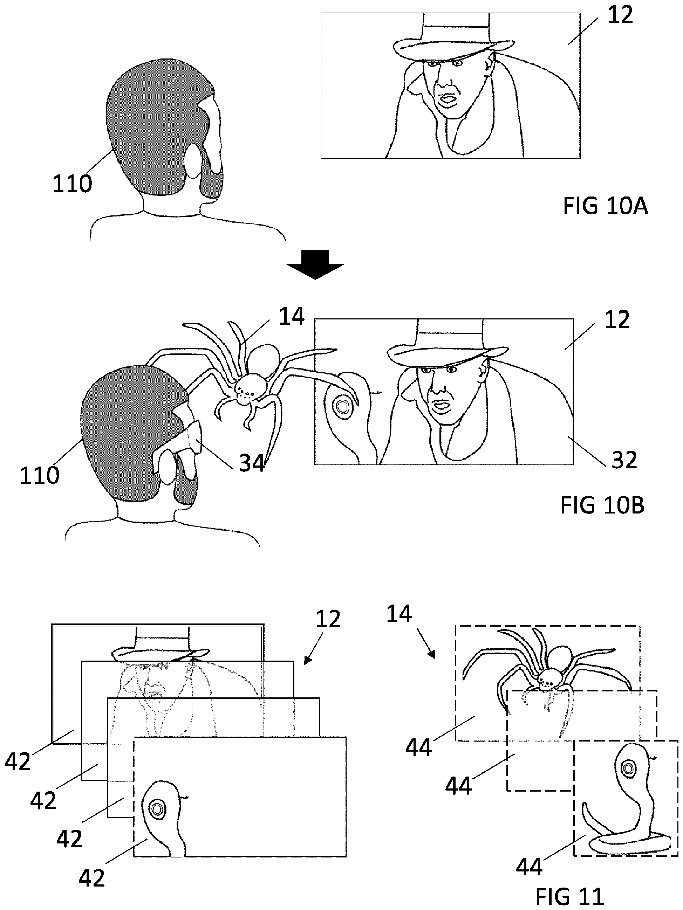

FIGs 8A and 8B illustrate how the augmenting video content 24 is presented in addition to unchanged primary video content 22. FIGs 9A and 9B illustrate how the augmenting video content 24 is presented in addition to changed primary video content 22 (object removed). FIGs 10A and 10B illustrate how the augmenting video content 24 is presented in addition to changed primary video content 22 (object added).

In these examples, a user is watching primary video content 22 on a television set 32. This can be, e.g., streamed video content from a streaming service. The user 110 then puts on a head-mounted second apparatus 34 that connects to the same streaming service. For example, it can connect to a server independently or it can connect to the smart television set 32. The availability of the second apparatus 34 triggers selection for presentation of augmenting video content 24. This augmenting video content 24 is associated with the primary video content 22. In some examples, the primary video content 22 is modified.

In FIGs 8A & 8B, augmenting video content 24 (giant spider) is added when the second apparatus 34 becomes available.

In FIGs 9A & 9B, augmenting video content 24 (spider and snake) is added when the second apparatus 34 becomes available. To avoid object duplication, the system has also updated the rendering of the primary video content 22 to remove the object (snake) now presented in the augmenting video content 24. The snake is no longer in the primary video content 22 (FIG 9B). In examples, the alignment of the augmenting video content 24 (e.g., relative to the primary video content 22 and/or the user position) can be based on metadata (e.g., configuration parameters 26) provided with the augmenting video content 24.

In FIGs 10A & 10B, augmenting video content24 (spider) is added when the second apparatus 34 becomes available. The system has also updated the rendering of the primary video content 22 to add an object (snake) into the primary video content 22 (FIG 10B). Thus, specific primary video content 22 is presented on the first apparatus 32 only if the second apparatus 34 is presenting augmenting video content 24 or is presenting specific augmenting video content 24 associated with the specific primary video content 22. This feature is particularly interesting in multi-user use cases, where some of the immersive elements that become available for a first user who takes advantage of an augmented reality device 34 can be adaptively added to the primary video content 22 to connect also a second non-AR user with the additional content experience. For example, this can act as a recommendation method for the second user to also launch an AR device 34 for a more immersive experience.

FIG 11 illustrates the use of layered video content 12, 14. In this example, but not necessarily all examples, the video content stream 20 is pre-separated into different layers. For example, the primary video content 22 can be represented as one of one layer 42. The primary video content 22 that is displayed is based on one or more selected layers 42. The selection of the one or more layers 42 from a defined set of layers 42 controls the primary video content 22.

For example, the augmenting video content 24 can be represented as one or more layers 44. The augmenting video content 24 that is displayed is based on one or more selected layers 44. The selection of the one or more layers 44 from a defined set of layers 44 controls the augmenting video content 24.

It is understood that a single layer can consist of at least one of: 2D or 3D bitmap/pixel/voxel image, vector image, or model (e.g., a 3D object model). Each layer or element on a layer can be associated with further description, e.g., metadata describing size. For example, a 2D bitmap image may in some examples be accompanied by a depth map.

The selection of different layers 42, 44 can be contextual specific and adaptive. It can, for example, take into account apparatus capabilities and user position to optimize the experience.

A generalized media content model is based on a first set of primary video content layers 42 intended for presentation to the user via the first display space 12 and a second set of augmenting video content layers 44 for presentation to the user using the second display space 14. Combination of criteria define how one or more layers of the first set of primary video content layers 42 are used simultaneously with one or more layers of the second set of augmenting video content layers 44.

There are at least two sets of layers. The first set defines the primary video content 22. This set has N layers, where N is at least 1. If N > 1, the additional layers may provide, e.g., alternative views, alternative content for different markets or age restrictions, or enhancements or primary video content augmentation that may be user-selectable. Certain aspects of the primary video content presentation can be user-controllable.

The augmenting video content 24 relates to any external augmentation, e.g., AR/XR augmentation of primary video content 22. There are M layers at any given time, where M >= 0.

The system 120 selects one or more of the M layers for presentation based on availability of a suitable second display space 14. Furthermore, there can be various other criteria as will be explained in embodiments.

In one example, N=1. The man and snake are in a single layer. There is no effect on this presentation from content presentation of the augmenting video content 24. For example, the primary video content 22 can constitute a movie or any other suitable media content. As there is no interaction from the augmenting video content 24, the primary video content 22 can be any content including legacy content.

In another example, N>1. The man and snake are in different layers. A baseline layer with the person does not depict a snake, and the additional content layer depicts a snake. The additional content layer is an adaptive layer that has a dependency with the augmenting video content 24. For example, selection of a certain layer from the augmenting video content 24 (e.g., the snake layer) for display in the second display space 14, causes an associated layer 42 in the primary video content 22 (e.g., the snake layer) to not be displayed in the first display space 12. Only the baseline layer of the primary video content (e.g., the person) is displayed in the first display space 12.

However, in other circumstances, for example when the selected layer from the augmenting video content 24 for display in the second display space 14 is not a snake layer and is not associated with the snake layer in the primary video content 22, then the non-associated layer in the primary video content 22 (e.g., the snake layer) is displayed in the first display space 12 along with the baseline layer of the primary video content (e.g., the person).

Various metadata (configuration parameters 26) may be associated with different individual layers. For example, certain layers 42, 44 may be intended for presentation under all circumstances, where a suitable presentation device is present, while other layers may be optional and, e.g., in some cases at least two of the M layers may be alternatives for each other. The selection between such alternatives for presentation can be contextual, that is based on evaluated criteria.

In some circumstances the augmenting video content 24 displayed in the second display space 14 comprises only the spider (FIG 8B), in others, the augmenting video content 24 displayed in the second display space 14 comprises only the snake (not illustrated) and in others, the augmenting video content 24 displayed in the second display space 14 comprises both the snake and the spider (FIG 9B).

Thus, the system can comprise: one or more apparatus configured to provide a display space 10 comprising the first display space 12 for displaying 102 the primary video content 22 and a second display space 14; means for controlling display of the primary video content 22 in the first display space 12; and means for controlling display of augmenting video content 24 in at least a portion of the second display space 14 in dependence upon a size of the second display space 14, wherein the video stream 20 comprises one or more parameters 26 that define, in dependence upon the size of the second display space 14, which sub-set of a set of augmenting video objects is displayed.

The augmenting video objects are different video objects, not merely different scales or different presentations of the same video object.

The selection of the augmenting video content layer(s) 44 can be based on a capability of the second apparatus 34 such as its display size e.g., screen size (e.g., a smartphone capability) or AR field of view (e.g., a head-mounted display (HMD) capability).

On a second apparatus 34 with a relatively small screen such as a smartphone, the system selects an augmenting video content layers 44 that depicts smaller augmenting video objects or augmenting video content 24 that is farther away from the user. With a larger screen, e.g., a tablet, the system can select augmenting video content 24 that will appear larger.

In both of these examples, the system considers metadata (e.g., configuration parameters 26) relating to an augmentation video content layers 44. Based on the metadata and the device capability, it can be determined, e.g., what size a certain content would require for high-quality presentation. For example, the metadata can include information on content's current position and size as well as the maximum size (based on position) the content may appear. It can then be possible to select a suitable video content layer, e.g., such that content is not cropped when user is viewing in its direction.

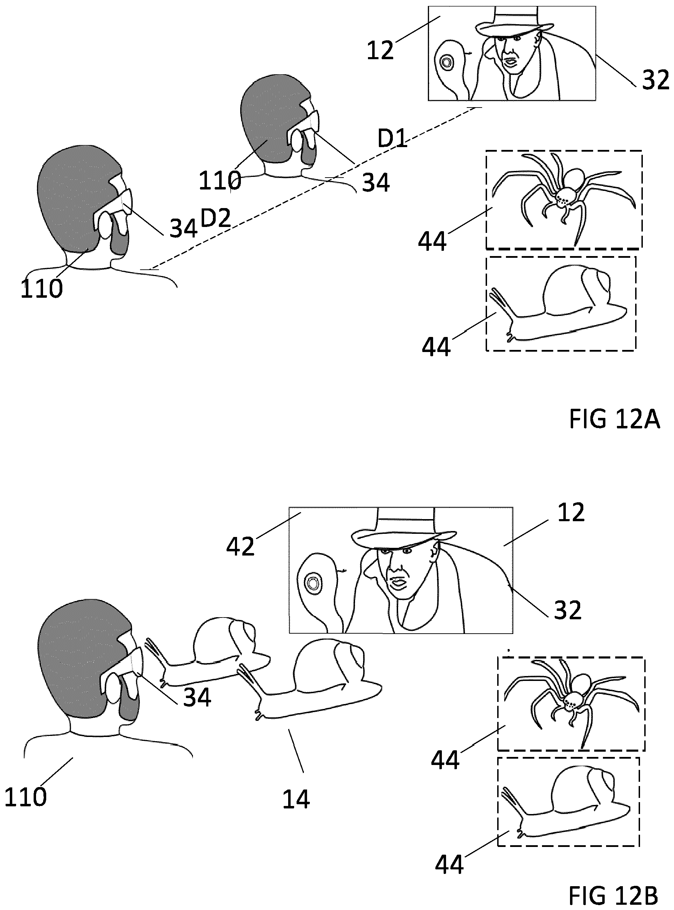

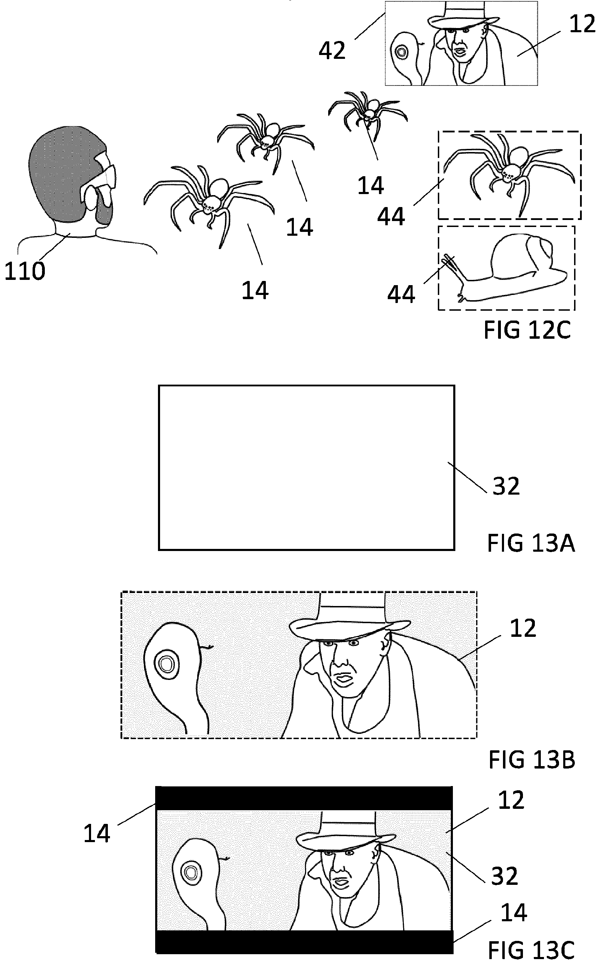

As illustrated in FIGs 12A, 12B, 12C the selection of augmenting video content 24 for presentation can be based on a relative position of the user and the first apparatus 32

A video object represented by the selected augmenting video content 24 can have a e.g., position and or speed based on the relative position.

In FIG 12A, a user 110 can view primary video content 22 presented on a first apparatus 32 at various distances, e.g., at `D1' and `D2'. The user is wearing a connected HMD device as the second apparatus 34. The augmenting video content 24 comprises at least two layers 44.

For example, one of the layers 44 features as video objects spiders while the other layer 44 features as video objects snails.

The metadata (e.g., configuration parameters 26) may indicate that video objects defined by the augmenting video content layers 44 are intended to move towards the user 110. For sake of immersion, it can thus be beneficial to select content whose movement matches the available distance D1, D2. If relative distance between the first apparatus 32 and the user 110 is small, the system selects a slowly moving video object (the snails). And if the relative distance is large, the system selects quickly moving video objects (spiders). Thus, it may be possible for the video object to cover the distance to the user 110 in an intended time period in a realistic way, which improves the immersion.

Alternatively, the presentation modification may relate to changing position of content, e.g., to bring it closer to a user due to a relatively long distance. Or, speed or trajectory of content movement may be modified if content is intended to, e.g., move a certain distance during the presentation and user is too close to or too far from the first apparatus 32 to maintain content creator intent in rendering.

Figure 12B, 12C present example content layer choices for the above example. For example, slowly moving snails may be presented when the distance is relatively small (D1), while faster movement, e.g., spiders, may be preferred when the distance is relatively large (D2).

In some examples, the selection of augmenting video content 24 for presentation can be based on detection and scaling of anchors within the primary video content 22. Alternatively, or in addition, the augmenting video content 24 can be modified in size and/or position based on the said scaling of anchors. Anchors are typically visual items (e.g., in a 2D/3D video they can include shapes, meshes, bitmaps, etc.) that are defined as part of, e.g., metadata relating to a video content element (layer, object). When an AR/XR device 34 detects such anchor, e.g., using at least one camera, it knows to select and trigger certain AR/XR content. For example, the AR/XR can present the selected content at this point or, e.g., at some specified offset from it.

For example, the primary video content 22 comprises anchors referenced in metadata (e.g., configuration parameters 26). The anchors can be, e.g., time-varying visual features that a camera can track.

The presentation of the augmenting video content 24 (presence, position, size etc) can be dependent upon the existence and/or spacing of the anchors.

In some examples, the primary video content 22 and the augmenting video content 24 are provided via separate streams. In other examples, the primary video content 22 and the augmenting video content 24 are provided via single stream.

FIG 13A illustrates an example of a first apparatus 32, which in this example is a television screen. FIG 13B illustrates an example of a primary video content 22 in its native aspect ratio. The native aspect ratio of the primary video content 22 is greater than the aspect ratio of the television. Therefore, when the television screen 32 displays the primary video content 22 in its native aspect ratio it is displayed with peripheral black borders at the top and bottom of the screen. The portion of the television screen 32 used by the primary video content 22 is the first display space 12. The unused peripheral borders are the second display space 14.

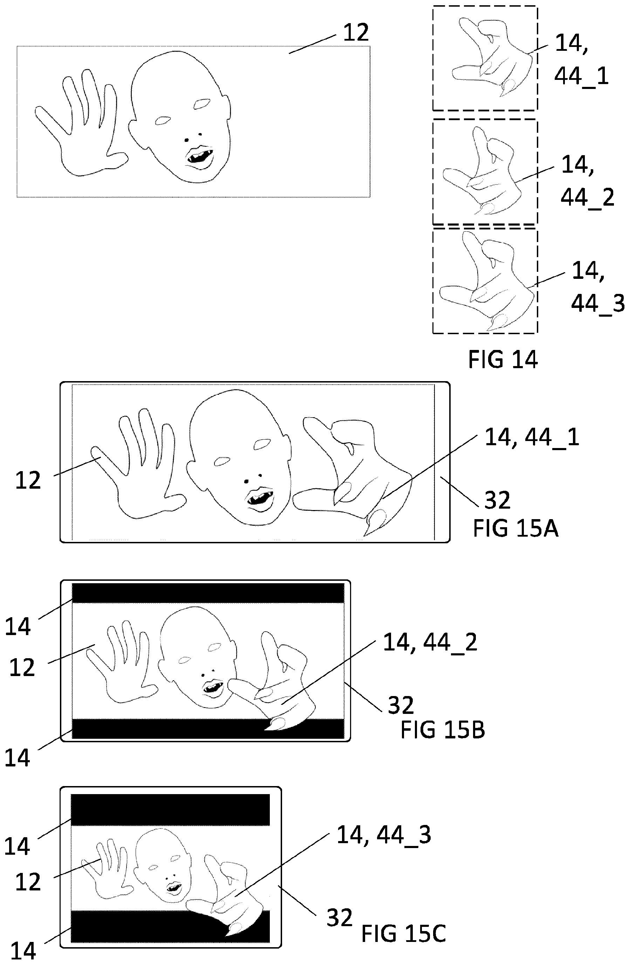

FIG 14 illustrates an example of primary video content 22 that has associated augmenting video content 24. The augmenting video content 24 has different layers 44_1, 44_2, 44_3.

FIGs 15A, 15B, 15C illustrate the presentation of the primary video content 22 of FIG 14 on televisions 32 using different aspect ratios. The primary video content 22 is displayed in each television 32 at its native aspect ratio. The presence and size of the peripheral top and bottom borders (the second display space 14) changes with the aspect ratio of the television 32. The selection of which layer 44_1, 44_2, 44_3 is used to provide the augmenting video content 24 is dependent upon the size of the second display space 14 (the size of the borders). The position and sizing of the video object represented by the augmenting video content 24 is also dependent upon the size of the second display space 14 (the size of the borders).

In this example, the layers 44_n provide similar video content. However, in other examples, the layers 44_n can provide very different augmenting video content 24.

In FIG 15A, on an ultra-widescreen TV, as there are no black borders, the augmenting video content 24 completely overlaps with the baseline layer content. The augmenting video content 24 is positioned to occupy an empty space of the primary video content 22 in a manner controlled by the content creator.

In FIG 15B, on a widescreen TV with 16:9 aspect ratio, noticeable black borders appear. Now, an augmenting video content 24 occupies the black border area.

In FIG 15C, on a 4:3 aspect ratio TV, we get a classic letterbox presentation and even bigger black bars are visible. This allows for greater overlap of the black bars by the augmenting video content 24, which can be relatively larger without, e.g., blocking any primary video content 22 that the content creator does not wish to be blocked.

Another example would be that an augmenting video content 24, e.g., one of the hands in FIG 15A, 15B, 15C, appears at real-world size regardless of the size of the apparatus 32. Thus, e.g., in one example content, fingers may appear to grasp the border of the screen. The fingers would be of realistic size. So, for a very small screen, e.g., only a couple of fingers will become visible. On a larger screen, the whole hand can become visible. But on a huge screen, only a very small portion of the screen border would be taken by the fingers. The layer selection and its rendering are thus based on the device capabilities or characteristics as specified in the metadata (e.g., configuration parameters 26) of the layered video content.

Thus, in some examples, the system 120 is for controlling display of a video content stream 20 comprising primary video content 22 for display in a first display space 12 and augmenting video content 24. The system 120 comprises: a first apparatus 32 configured to provide a display space 10 comprising the first display space 12 for displaying 102 the primary video content 22 and a second display space 14, and configured to control the display space 10 to display the primary video content 22 and the augmenting video content 24; means for controlling display of the primary video content 22 in the first display space 12; and means for controlling display of augmenting video content 24 in at least a portion of the second display space 14 in dependence upon a size of the second display space 14, wherein the second display space 14 is a peripheral margin of the display space 10 that is not part of the first display space 12 and is unused to display the primary video content 22.

A size of second display space 14 is dependent upon an aspect ratio of a presentation format of the primary video content 22, wherein the second display space 14 provides a peripheral border to the first display space 12.

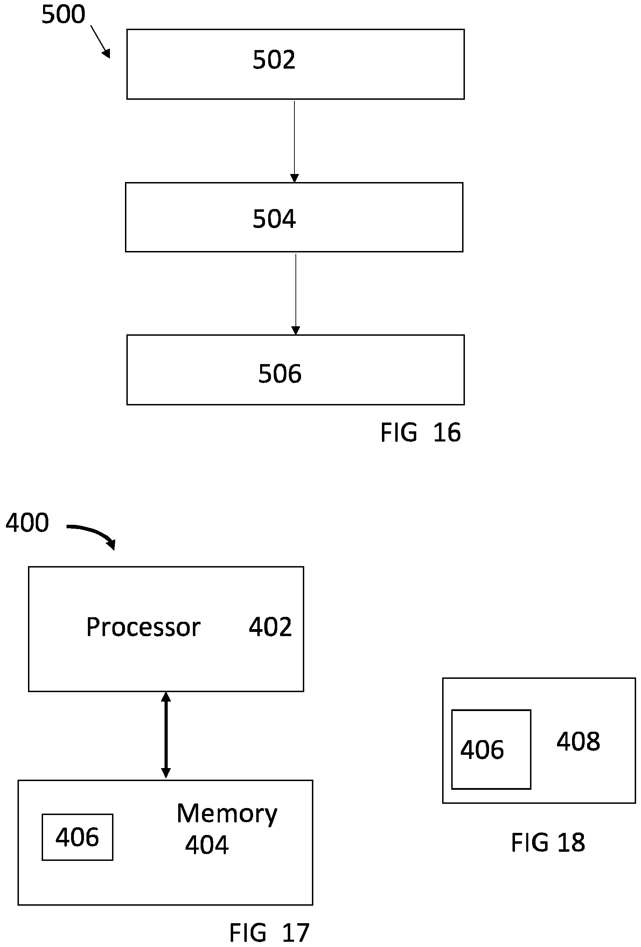

FIG 16 illustrates an example of a method 500 for controlling display to a consumer 110 of a video content stream 20 comprising primary video content 22 for display in a first display space 12 and augmenting video content 24, the method comprising:
at block 502, providing a display space 10 comprising a first display space 12 for displaying 102 to the consumer 110 the primary video content 22 and a second display space 14;
at block 504, controlling display to the consumer 110 of the primary video content 22 in the first display space 12; and
at block 506, controlling, automatically without any contemporaneous consumer 110 input, simultaneous display to the consumer 110 of the augmenting video content 24 in at least a portion of the second display space 14 in dependence upon a size of the second display space 14.

Fig 17 illustrates an example of a controller 400. Implementation of a controller 400 may be as controller circuitry. The controller 400 may be implemented in hardware alone, have certain aspects in software including firmware alone or can be a combination of hardware and software (including firmware).

As illustrated in Fig 17 the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 32, 34 when loaded into the processor 402. The computer program instructions, of the computer program 406, provide the logic and routines that enables the apparatus to perform the methods illustrated in Figs 16. The processor 402 by reading the memory 404 is able to load and execute the computer program 406.

The apparatus 32, 34 therefore comprises:
at least one processor 402; and
at least one memory 404 including computer program code
the at least one memory 404 and the computer program code configured to, with the at least one processor 402, cause the apparatus 32, 34 at least to perform:
   accessing a video content stream 20 comprising primary video content 22 for display to a consumer 110 in a first display space 12 and augmenting video content 24;
   controlling a display space 10 comprising the first display space 12 for displaying 102 to the consumer 110 the primary video content 22 and a second display space 14;
   controlling display to the consumer 110 of the primary video content 22 in the first display space 12; and
   controlling, automatically without any contemporaneous consumer 110 input, simultaneous display to the consumer 110 of the augmenting video content 24 in at least a portion of the second display space 14 in dependence upon a size of the second display space 14.

As illustrated in Fig 18, the computer program 406 may arrive at the apparatus 32, 34 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 32, 34 may propagate or transmit the computer program 406 as a computer data signal.

Computer program instructions for causing an apparatus to perform at least the following or for performing at least the following:
accessing a video content stream 20 comprising primary video content 22 for display to a consumer 110 in a first display space 12 and augmenting video content 24;
controlling a display space 10 comprising the first display space 12 for displaying 102 to the consumer 110 the primary video content 22 and a second display space 14;
controlling display to the consumer 110 of the primary video content 22 in the first display space 12; and
controlling, automatically without any contemporaneous consumer 110 input, simultaneous display to the consumer 110 of the augmenting video content 24 in at least a portion of the second display space 14 in dependence upon a size of the second display space 14.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 16 may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

Where a structural feature has been described, it may be replaced by means for performing one or more of the functions of the structural feature whether that function or those functions are explicitly or implicitly described.

As used here 'module' refers to a unit or apparatus that excludes certain parts/components that would be added by an end manufacturer or a user. The controller 400 can be a module.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a' or `the' is used in this document with an inclusive not an exclusive meaning. That is any reference to X comprising a/the Y indicates that X may comprise only one Y or may comprise more than one Y unless the context clearly indicates the contrary. If it is intended to use 'a' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A system for controlling display to a consumer of a video content stream comprising primary video content for display in a first display space and augmenting video content, the system comprising:
one or more apparatus configured to provide a display space comprising the first display space for displaying to the consumer the primary video content and a second display space;
means for controlling display to the consumer of the primary video content in the first display space; and
means for controlling, automatically without any contemporaneous consumer input, simultaneous display to the consumer of augmenting video content in at least a portion of the second display space in dependence upon a size of the second display space.

2. A system as claimed in claim 1, wherein the video content stream is protected to prevent modification.

3. A system as claimed in claim 1 or 2, wherein the video stream comprises one or more parameters that define, in dependence upon the size of the second display space, whether or not any augmenting video content is displayed.

4. A system as claimed in any preceding claim, wherein the video stream comprises one or more parameters that define where augmenting video content is displayed

5. A system as claimed in any preceding claim, wherein the video stream comprises one or more parameters that define, in dependence upon the size of the second display space, at what scale augmenting video content is displayed.

6. A system as claimed in any preceding claim, wherein the video stream comprises one or more parameters that define, in dependence upon the size of the second display space, which sub-set of a set of augmenting video objects is displayed.

7. A system as claimed in any preceding claim comprising means for determining a size of the second display space, and means for detecting a change in a size of the second display space to a new size, and means for controlling display of augmenting video content in at least a portion of the second display space in dependence upon a new size of the second display space.

8. A system as claimed in any preceding claim, comprising a first apparatus configured to control the first display space and display the primary video content in the first display space and a second apparatus configured to control the second display space and display the augmenting video content in the second display space.

9. A system as claimed in claim 8, wherein a size of the second display space is dependent upon a size of a display of the second apparatus.

10. A system as claimed in claim 8 or 9, wherein a size of the second display space is an effective size of the second display space with respect to a size of the first display space from a perspective of the consumer using the second apparatus.

11. A system as claimed in claim 8, 9 or 10, wherein a size of the second display space, and display of the augmenting video content, are dependent upon:
a distance between the first apparatus and the second apparatus;
an angle of view of the second apparatus; and/or
the first display space.

12. A system as claimed in claim 8, 9, 10 or 11, wherein the second apparatus is a hand-portable apparatus or a head-worn apparatus.

13. A system as claimed in any of claims 1 to 7, comprising a first apparatus configured to control the display space comprising the first display space and the second display space, and display the primary video content and the augmenting video content in the display space, wherein the primary video content is displayed in the first display space and the augmenting video content is displayed at least in the second display space.

14. A method for controlling display to a consumer of a video content stream comprising primary video content for display in a first display space and augmenting video content, the method comprising:
providing a display space comprising a first display space for displaying to the consumer the primary video content and a second display space;
controlling display to the consumer of the primary video content in the first display space; and
controlling, automatically without any contemporaneous consumer input, simultaneous display to the consumer of the augmenting video content in at least a portion of the second display space in dependence upon a size of the second display space.

15. A computer program that when run by a computer enables:
accessing a video content stream comprising primary video content for display to a consumer in a first display space and augmenting video content;
controlling a display space comprising the first display space for displaying to the consumer the primary video content and a second display space;
controlling display to the consumer of the primary video content in the first display space; and
controlling, automatically without any contemporaneous consumer input, simultaneous display to the consumer of the augmenting video content in at least a portion of the second display space in dependence upon a size of the second display space.

16. A system as claimed in any of claims 1-13, wherein the augmenting video content in at least a portion of the second display space augments the primary video content.
